# EUROPEAN PATENT SPECIFICATION

(11) **EP 1 732 270 B1**
(45) Date of publication and mention of the grant of the patent: **15.10.2014**
(21) Application number: 06252884.9
(22) Date of filing: 03.06.2006
(51) Int. Cl.: H04L 12/28, H04L 29/12

(54) **Method and system for maintaining persistent unique identifiers of devices in a network**
Verfahren und System zur Aufrechterhaltung von dauerhaft eindeutigen Gerätidentifizierern in einem Netzwerk
Procédé et système pour maintenir des identifiants uniques persistants pour des dispositifs en réseau

(30) Priority: 07.06.2005 US 147637
(43) Date of publication of application: 13.12.2006
(73) Proprietor: Samsung Electronics Co., Ltd., Suwon-si, Gyeonggi-do, 443-742 (KR)
(72) Inventor: Park, Ho-yong, San Jose California 95129 (US); Kumar, Praveen, San Jose California 95134 (US); Messer, Alan, Los Gatos California 95032 (US); Zhu, Victor, Cupertino California 95032 (US)
(74) Representative: Grootscholten, Johannes A.M.

(56) References cited:
- EP-A- 1 005 197
- US-A1- 2004 059 817
- US-A1- 2004 122 931
- AGRAWAL D ET AL: "Exploiting atomic broadcast in replicated databases", (PROCEEDINGS OF EURO PAR 97. ANNUAL EUROPEAN CONFERENCE IN PARALLEL PROCESSING - 26-29 AUG. 1997 - PASSAU, GERMANY),, 26 August 1997 (1997-08-26), pages 496-503, XP009140380,

## Description

The present invention relates to device identification in networks.

Many device architecture standards for networks use a two device type model: controller devices (i.e., controller) and controlled devices. In this model, controllers act as masters for the controlled devices. Controllers keep track of the state of controlled devices in order to maintain connections and operations to the controlled devices. Within home network environments, controlled devices may be removed from the network for different reasons such as software defects, power failure, user intervention, etc. In such cases, controllers may require use of the same state for the controlled devices to continue the previous operation without interruption, if a controlled device is removed from the home network and later reconnected to the home network. As such, a persistent unique identifier for devices is necessary to identify the device and to use the same state.

Conventionally, Universal Plug and Play (UPnP) uses two identifications: (1) Universal Resource Locator (URL) to the UPnP description of the root device contains a literal IP address and port number, and (2) Unique Device Name (UDN) is a universally-unique identifier for the device in the UPnP description. However, the UPnP device architecture specification specifies that UDN are based on MAC address and time, and so is not constant over time. URLs can also be changed when devices reboot as new IP address or different port numbers can be assigned.

Home Audio Visual Interoperability architecture (HAVi) uses a globally unique identifier (GUID) to identify devices independent of a firewire bus reset, as firewire identifiers may change after a firewire bus reset. However, the GUID for a device is allowed to change over time if there is no persistence in the device. Further, some device architectures do not define an identifier for devices. In such cases, it becomes the controllers' responsibility to identify devices.

The situation becomes more complicated when different device stacks and protocols are mixed in a network and a controller must use mixed devices. Within such an environment, controllers need to identify devices from different device architectures. In addition, many controllers can co-exist in the network.

There is, therefore, a need for a method and system for maintaining a persistent unique identifier for devices. There is also a need for such a method and system to allow controllers to use the same identifier for the same device, such that by sharing the identifiers, operations from one controller can easily transferred to other controllers.

US-A-2004/0122931 discloses a method and system for maintaining persistent unique identifiers using fingerprints.

Preferred embodiments of the present invention aim to provide a method and system of automatically maintaining persistent unique identifiers for networked devices that may be removed from the network, and later reintroduced into the network.

This object is achieved by the subject-matter as defined in claims 1-11.

In a first aspect, there is provided a method of maintaining persistent unique identifiers for devices interconnected in a network, comprising the steps of: obtaining information from a device; generating a fingerprint from that information; determining if the fingerprint is previously associated with an identifier in the network; if the fingerprint is not previously associated with an identifier in the network, then: (a) generating a new identifier using a globally unique identifier algorithm; b) associating the new identifier with the fingerprint, and c) storing the fingerprint and the associated new identifier in a memory, wherein the new identifier forms a persistent unique identifier (PUID) for that device; if the fingerprint is previously associated with an identifier in the network, then utilizing the associated identifier stored in the memory as the persistent unique identifier, PUID for that device; broadcasting the new PUID to device controllers in the network.

The obtained information from device can include device information. Determining if the fingerprint is previously associated with an identifier in the network can further include the steps of searching the stored fingerprints and associated identifiers in the memory. The step of generating a new identifier associated with the fingerprint can further include the steps of mapping the fingerprint to a unique identifier. In addition, the step of generating a fingerprint can further include the steps of generating a message digest from the obtained information.

The step of storing the new identifier can further include the steps of storing the new identifier associated with the message digest in a message digest table in a controller's memory or a persistent store. Further, the step of generating a new identifier associated with the message digest can include the step of mapping the message digest to a unique identifier.

In another aspect the present invention provides a system for maintaining persistent unique identifiers for devices interconnected in a network, comprising: an identification apparatus adapted to generate a fingerprint from information obtained from a device; a mapper adapted to determine if the fingerprint is previously associated with an identifier in the network; a generator adapted to generate a new identifier; such that: if the fingerprint is not previously associated with an identifier in the network, then the generator is adapted to generate a new identifier using a globally unique identifier algorithm, and the mapper is adapted to associate the new identifier with the fingerprint, and to store the fingerprint and the associated new identifier in a memory of a device, wherein the new identifier forms a persistent unique identifier, PUID, for that device; and if the fingerprint is previously associated with an identifier in the network, then the mapper is adapted to utilize the associated identifier stored in the memory as the persistent unique identifier, PUID, for that device; wherein the system further comprises a consistency checker adapted to broadcast the new PUID to device controllers in the network.

In another embodiment the present invention provides a network comprising: a plurality of devices interconnected with a controller that controls one or more said devices; and a system connected to the network, wherein the system allows the controller to maintain persistent unique identifiers for one or more of the devices, the system being according to the preceding aspect of the invention.

According to preferred embodiments of the present invention, by using persistent unique identifiers, controllers can identify the same controller device and use their previous state to refer operations to the same controller device without reconfiguration. This allows for quick fault recovery. Such a method and system provides a unique identifier even if the device architecture does not define an identifier.

Further, by using persistent unique identifiers, controllers can share the identifiers and transfer operations to other controllers easily. By transferring operations from faulty controllers to other controllers, the network can be more reliable. In addition, users can move to other locations and continue operation by transferring operations from a control point in the previous location to a control point in the new location within the network. In another embodiment, the control point uses a device to be identified, to store the globally unique persistent ID back into the device. Then, the control point can retrieve that ID from the device when the control point encounters that device again.

The present invention will now be described by way of example only, with reference to the accompanying drawings; in which:
FIG. 1 shows an example functional block diagram of a network according to an embodiment of the present invention;
FIG. 2 shows an example functional block diagram of a system for maintaining persistent unique identifiers for devices in a network according to another embodiment of the present invention; and
FIG. 3 shows a flowchart of an example method for maintaining persistent unique identifiers for devices in a network according to another embodiment of the present invention.

In one embodiment the present invention provides a method and system of automatically maintaining persistent unique identifiers for networked devices that may be removed from the network, and later reintroduced into the network.

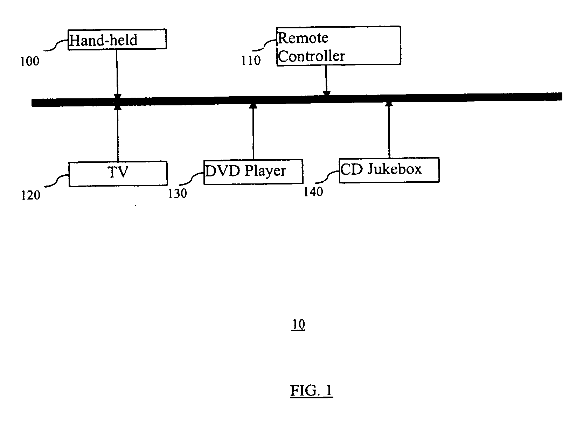

FIG. 1 shows an example functional block diagram of a network 10 (e.g., home network) in which an embodiment of the present invention is implemented. In this example, a hand-held device 100, a remote controller 110, home electronics devices, such as a DVD player 120, a TV 130, and a CD jukebox 140, are connected to the home network 10. The hand-held device 100 and the remote controller 110 are control points (i.e., controllers) with which the home electronics devices (i.e., controlled devices) are controlled.

The controllers 100 and 110 discover the controlled devices 120, 130 and 140 in the network 10, and retrieve device descriptions from the controlled devices 120, 130 and 140. Using the device descriptions, the controller 100 and 110 generate unique and persistent device identifiers (PUIDs) for controlling the controlled devices 120, 130 and 140.

In one example, the hand-held device 100 uses a unique and persistent identifier for controlling the CD jukebox 140 to play a list of tracks for a user by showing the current track information on a display of the hand-held device 100. The hand-held device 100 implements a method of maintaining a persistent unique identifier for each controlled device, with which the hand-held device 100 can keep track of the operation of the controlled devices.

In one operation scenario, if the CD jukebox 140 is disconnected from the network 10 (e.g., due to temporary power outage), and later reconnected to the network 10, the hand-held device 100 uniquely re-identifies the CD jukebox 140 (i.e., generates the same unique and persistent identifier) in order to continue previous session of playing a list of tracks. Without this feature according to this embodiment of the present invention, a user needs to re-invoke commands to the hand-held device 100 to play the list of tracks.

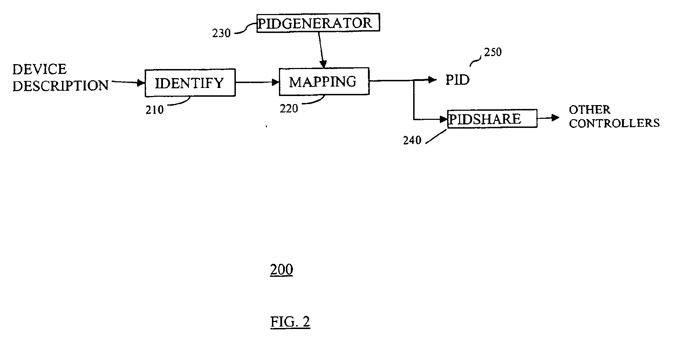

FIG. 2 shows an example function block diagram of the architecture of a system 200 according to an embodiment of the present invention which generates and maintains a persistent and unique identifier (PUID) for each controlled device. The system 200 can be implemented within each controller. In this example, the system includes an identifier block 210, a mapper 220, a PUID generator 230, and a PUIDshare block 240.

In this example, the identifier block 210 identifies the same controlled device even after the device restarts. The identifier block 210 uses a device description from the device to identify the device (examples of device description include hash of the device name, device API, device MAC address, device service description, device configuration, device serial number, etc.). The identifier block 210 utilizes the device and service descriptions rather than a simple identifier from that device, because the simple identifier from a device may change through restarts. In addition, using the device description provides a more robust identification process.

As those skilled in the art will appreciate, other information in place of, or in addition to, the device description may be utilized which allows the system to generate a persistent and unique identifier for each device according to preferred embodiments of the present invention.

The identifier block 210 generates a fingerprint or message digest from the device description. Techniques such as MD5 message-digest algorithm or Cyclic Redundancy Code (CRC), can be used to generate message digests. Message digests are usually 128-bit fixed numbers and are generated from a message of arbitrary length. Generally, it is computationally infeasible to produce two messages having the same message digest, or to produce any message having a pre-specified target message digest. The idea is that a variety of information is gained and used to generate the ID. Therefore, the mapper 220 does not store information, but instead generates the PUID from the information using a hash function.

The mapper 220 uses the message digest generated by the identifier block 210 to determine if the device is already known to the controller associated with the system. To do so, the mapper 220 searches an internal table (e.g., message digest table) that maintains mapping from a message digest to a persistent identifier for the message digest. The mapper 220 can use a known technique for mapping an entity to another entity such as a hash table, wherein a hash table is a dictionary in which keys are mapped to a position by a hash function. In one embodiment of the present invention, the key for the dictionary is the message digest and the value for the dictionary is the persistent identifier.

If the message digest for a device is found in the internal tables of the mapper 220, the associated PUID 250 is used by the controller. If the message digest for the device is not found in the internal tables of the mapper 220, then the generator 230 generates a unique identifier. A globally unique identifier (GUID) is most widely used for generating a unique identifier. As GUID algorithms require a real time clock (RTC) which may not be available, simple random numbers can replace the clock value. A new PUID 250 is generated by the mapper 220 and is associated with the message digest. The new PUID 250 is also stored in the internal tables of the mapper 220.

In another embodiment, a table is not used, rather for certain classes of devices, specific device-related information is used in a hash function to generate a globally unique PUID. As such, the finger print is generated from the message digest and the identifier block and used as the PUID. An example of using a device description to generate a PUID includes the steps of: read a UPnP description, checking to see if a PUID is already there and if not, then extract APIs from that description, extract device name from that description, extract manufacturer name and serial number from that description, hash over the extracted information resulting in a 128-bit number, and using that number as a PUID. An alternative embodiment is that the hash itself is used as the ID, whereby there is no need for a lookup table. Hashes are usually 128bit numbers, so they can easily be used as the ID itself.

The PUIDShare block 240 broadcasts the new PUID 250 to other controllers in the network. The PUIDShare 240 is responsible for maintaining the consistency of the persistent identifier PUID for the devices among the controllers. It is possible for other controllers to generate new PUIDs simultaneously and to broadcast to other controllers. The PUIDShare 240 in each controller implements a typical distributed updating, to pick a unique identifier for use in the network. In another example, a replication technique can be used for PUIDShare 240 to be more efficient by reducing network traffic.

In an alternative embodiment, the identifier block 210 implements rule-based decision logic instead of device descriptions from the devices. Rule-based decision logic could be used for identifying the device description fields to determine similar devices. In one example, a rule uses a serial number or a product UPC to identify a device. As those skilled in the art will appreciate, other example rules are possible.

When a controller is turned on and connects to the network, the controller prompts the mapper to establish the above-mentioned mapping for the controlled devices in the network. Using a persistent storage to store the persistent identifiers maintained by the mapper 220, the controller can avoid re-establishing the mapping and provide consistency to the user.

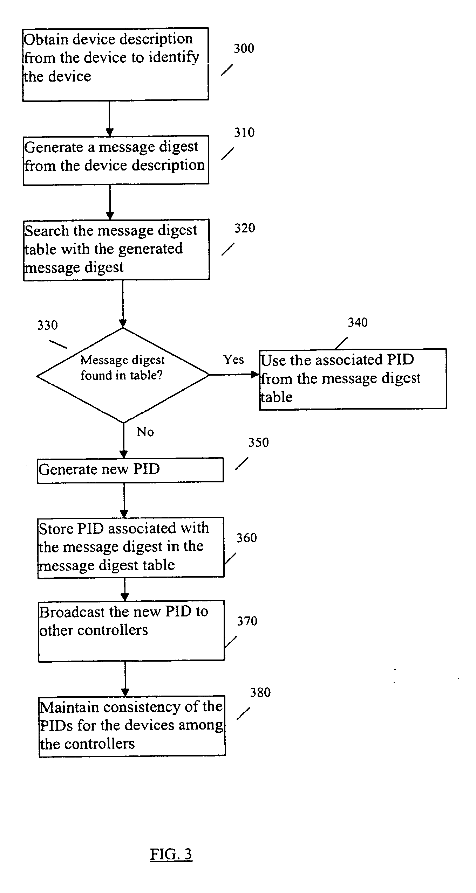

FIG. 3 shows an example flowchart of the steps of generating and maintaining a unique and persistent device identifier according to another embodiment of the present invention. The steps can be implemented as an independent system that is connected to the network 10, or in each controller in FIG. 1. In the flowchart of FIG. 3, an example operation within a controller is described wherein the controller identifies a device initially or after reconnected of the device to the network. As such, the controller performs steps including the following:
Obtain device description from the device to identify the device (step 300).

Generate a fingerprint or message digest from the device description (step 310).

Search the message digest table with the generated message digest to determine if the device is already known to the controller (step 320).

Is the generated message digest found in the message digest table (step 330).

If the message digest for the device is found in the message digest table, the associated PUID in the message digest table is accessed and used by the controller to identify the device (step 340).

If the message digest for the device is not found in the message digest table, generate a new PUID as described above (step 350).

Store new PUID in the message digest table (step 360).

Broadcast the new PUID to other controllers in the network (step 370).

Maintain consistency of the PUIDs for the devices among the controllers (step 380).

By using persistent unique identifiers, controllers can identify the same controller device and use their previous state to refer operations to the same controller device without reconfiguration. This allows for quick fault recovery and, more importantly, consistency to the user. Such a method and system provides a unique identifier even if the device architecture does not define an identifier.

For example, if a user has a cell phone, and uses that cell phone to connect to the system to transfer content to the cell phone, when the user disconnects from the system and later returns and reconnects to the system using that same cell phone, using the PUID scheme according to the present invention the system recognizes that same cell phone again.

Further, by using persistent unique identifiers PUIDs, controllers can share the identifiers and transfer operations to other controllers easily. By transferring operations from faulty controllers to other controllers, the network can be more reliable. In addition, users can move to other locations and continue operation by transferring operations from a control point in the previous location to a control point in the new location within the network.

While this invention is susceptible of embodiments in many different forms, there are shown in the drawings and will herein be described in detail, preferred embodiments of the invention with the understanding that the present disclosure is to be considered as an exemplification of the principles of the invention and is not intended to limit the broad aspects of the invention to the embodiments illustrated. The aforementioned example architectures in FIGS. 1 and 2, according to the present invention, can be implemented in many ways, such as program instructions for execution by a processor, as logic circuits, as ASIC, as firmware, etc., as is known to those skilled in the art. Therefore, the present invention is not limited to the example embodiments described herein.

The present invention has been described in considerable detail with reference to certain preferred versions thereof; however, other versions are possible. Therefore, the scope of the appended claims should not be limited to the description of the preferred versions contained herein.

## Claims

1. A method of maintaining persistent unique identifiers for devices interconnected in a network, comprising the steps of:
obtaining information, which is not changed through restart of a device, from the device (300);
generating a fingerprint from that information (310);
determining if the fingerprint is previously associated with an identifier in the network (320);
if the fingerprint is not previously associated with an identifier in the network, then:
(a) generating a new identifier using a globally unique identifier algorithm (350);
(b) associating the new identifier with the fingerprint;
(c) storing the fingerprint and the associated new identifier in a memory, wherein the new identifier forms a persistent unique identifier, PUID, for that device (360);
if the fingerprint is previously associated with an identifier in the network, then utilizing the associated identifier stored in the memory as the persistent unique identifier, PUID, for that device (340);
broadcasting the new PUID to device controllers in the network (370).

2. The method of claim 1, wherein the determining if the fingerprint is previously associated with an identifier in the network further includes the step of searching the stored fingerprints and associated identifiers in the memory.

3. The method of any preceding claim, wherein the step of generating a fingerprint further includes the steps of generating a message digest from the obtained information.

4. The method of claim 3, wherein the step of storing the new identifier further includes the steps of storing the new identifier associated with the message digest in a message digest table in the memory.

5. The method of any preceding claim, further including the step of maintaining consistency of the PUIDs for said devices among the device controllers in the network.

6. A system (200) for maintaining persistent unique identifiers for devices interconnected in a network, comprising:
an identification apparatus (210) adapted to generate a fingerprint from information, which is not changed through restart of a device; obtained from the device;
a mapper (220) adapted to determine if the fingerprint is previously associated with an identifier in the network;
a generator (230) adapted to generate a new identifier;
such that:
if the fingerprint is not previously associated with an identifier in the network, then the generator is adapted to generate a new identifier using a globally unique identifier algorithm, and the mapper is adapted to associate the new identifier with the fingerprint, and to store the fingerprint and the associated new identifier in a memory of a device, wherein the new identifier forms a persistent unique identifier, PUID, for that device; and
if the fingerprint is previously associated with an identifier in the network, then the mapper is adapted to utilize the associated identifier stored in the memory as the persistent unique identifier, PUID, for that device;
wherein the system further comprises a consistency checker adapted to broadcast the new PUID to device controllers in the network.

7. The system (200) of claim 6, wherein the mapper (220) is adapted to determine if the fingerprint is previously associated with an identifier in the network by searching the stored fingerprints and associated identifiers in the memory.

8. The system (200) of any one of claims 6-7, wherein the generator (230) is adapted to generate the fingerprint by generating a message digest from the obtained information.

9. The system (200) of claim 8, wherein the mapper (220) is adapted to store the new identifier associated with the message digest in a message digest table in the memory.

10. The system (200) of any one of claims 6-9, wherein the consistency checker is adapted to maintain consistency of the PUIDs for said devices among the device controllers in the network.

11. A network (10) comprising:
a plurality of devices (100, 110, 120, 130, 140) interconnected with a controller that controls one or more said devices; and
a system (200) connected to the network, wherein the system allows the controller to maintain persistent unique identifiers for one or more of the devices, the system being according to any one of claims 6-10.

## Patentansprüche

1. Verfahren zur Aufrechterhaltung dauerhafter eindeutiger Identifikatoren für in einem Netzwerk untereinander verbundene Vorrichtungen, umfassend die Schritte:
Erhalten von Informationen, die durch einen erneuten Start einer Vorrichtung nicht verändert werden, aus der Vorrichtung (300);
Erzeugen eines Fingerprints aus diesen Informationen (310);
Feststellen, ob der Fingerprint bereits einem Identifikator im Netzwerk zugeordnet ist (320);
falls der Fingerprint nicht bereits einem Identifikator im Netzwerk zugeordnet ist, dann:
(a) Erzeugen eines neuen Identifikators unter Verwendung eines Global-eindeutiger-Identifikator-Algorithmus (350);
(b) Zuordnen des neuen Identifikators zu dem Fingerprint;
(c) Speichern des Fingerprints und des zugeordneten neuen Identifikators in einem Speicher, wobei der neue Identifikator einen dauerhaften eindeutigen Identifikator, PUID: Persistent Unique Identifier, für diese Vorrichtung bildet (360);
falls der Fingerprint bereits einem Identifikator im Netzwerk zugeordnet ist, dann Verwenden des zugeordneten Identifikators, der im Speicher gespeichert ist, als des dauerhaften eindeutigen Identifikators, PUID, für diese Vorrichtung (340);
Broadcasten des neuen PUIDs an Vorrichtungscontroller im Netzwerk (370).

2. Verfahren nach Anspruch 1, wobei das Feststellen, ob der Fingerprint bereits einem Identifikator im Netzwerk zugeordnet ist, weiterhin den Schritt des Durchsuchens der gespeicherten Fingerprints und der zugeordneten Identifikatoren im Speicher einschließt.

3. Verfahren nach einem der vorstehenden Ansprüche, wobei der Schritt des Erzeugens eines Fingerprints weiterhin den Schritt des Generierens eines Message Digest aus den erhaltenen Informationen einschließt.

4. Verfahren nach Anspruch 3, wobei der Schritt des Speicherns des neuen Identifikators weiterhin den Schritt des Speicherns des dem Message Digest zugeordneten neuen Identifikators in einer Message-Digest-Tabelle im Speicher einschließt.

5. Verfahren nach einem der vorstehenden Ansprüche, das weiterhin den Schritt des Aufrechterhaltens von Übereinstimmung der PUIDs für die Vorrichtungen unter den Vorrichtungscontrollern im Netzwerk einschließt.

6. System (200) zur Aufrechterhaltung dauerhafter eindeutiger Identifikatoren für in einem Netzwerk untereinander verbundene Vorrichtungen, umfassend:
ein Identifikationsgerät (210), das dazu angepasst ist, einen Fingerprint aus von der Vorrichtung erhaltenen Informationen zu erzeugen, die durch einen erneuten Start einer Vorrichtung nicht verändert werden;
einen Mapper (220), der dazu angepasst ist festzustellen, ob der Fingerprint bereits einem Identifikator im Netzwerk zugeordnet ist;
einen Generator (230), der dazu angepasst ist, einen neuen Identifikator zu erzeugen;
so dass:
falls der Fingerprint nicht bereits einem Identifikator im Netzwerk zugeordnet ist, dann der Generator dazu angepasst ist, einen neuen Identifikator zu erzeugen unter Verwendung eines Global-eindeutiger-Identifikator-Algorithmus, und der Mapper dazu angepasst ist, den neuen Identifikator dem Fingerprint zuzuordnen, und den Fingerprint und den zugeordneten neuen Identifikator in einem Speicher einer Vorrichtung zu speichern, wobei der neue Identifikator einen dauerhaften eindeutigen Identifikator, PUID: Persistent Unique Identifier, für diese Vorrichtung bildet; und
falls der Fingerprint bereits einem Identifikator im Netzwerk zugeordnet ist, dann der Mapper dazu angepasst ist, den zugeordneten Identifikator, der im Speicher gespeichert ist, als den dauerhaften eindeutigen Identifikator, PUID, für diese Vorrichtung zu verwenden;
wobei das System weiterhin einen Übereinstimmungsprüfer umfasst, der dazu angepasst ist, den neuen PUID an Vorrichtungscontroller im Netzwerk zu broadcasten.

7. System (200) nach Anspruch 6, wobei der Mapper (220) dazu angepasst ist festzustellen, ob der Fingerprint bereits einem Identifikator im Netzwerk zugeordnet ist, durch Durchsuchen der gespeicherten Fingerprints und der zugeordneten Identifikatoren im Speicher.

8. System (200) nach einem der Ansprüche 6-7, wobei der Generator (230) dazu angepasst ist, den Fingerprint durch Generieren eines Message Digest aus den erhaltenen Informationen zu erzeugen.

9. System (200) nach Anspruch 8, wobei der Mapper (220) dazu angepasst ist, den dem Message Digest zugeordneten neuen Identifikator in einer Message-Digest-Tabelle im Speicher zu speichern.

10. System (200) nach einem der Ansprüche 6-9, wobei der Übereinstimmungsprüfer dazu angepasst ist, Übereinstimmung der PUIDs für die Vorrichtungen unter den Vorrichtungscontrollern im Netzwerk aufrechtzuerhalten.

11. Netzwerk (10), umfassend:
eine Vielzahl von Vorrichtungen (100, 110, 120, 130, 140), die mit einem Controller verbunden sind, der eine oder mehrere der Vorrichtungen steuert bzw. kontrolliert; und
ein mit dem Netzwerk verbundenes System (200), wobei das System dem Controller ermöglicht, dauerhafte eindeutige Identifikatoren für eine oder mehrere der Vorrichtungen aufrechtzuerhalten, wobei das System einem der Ansprüche 6-10 entspricht.

## Revendications

1. Procédé permettant de maintenir des identifiants uniques persistants relatifs à des dispositifs interconnectés dans un réseau, comprenant les étapes consistant à :
obtenir des informations, qui ne sont pas modifiées au redémarrage d'un appareil, en provenance dudit appareil (300) ;
générer une empreinte digitale à partir de ces informations (310) ;
déterminer si l'empreinte digitale a été précédemment associée à un identifiant au sein du réseau (320) ;
si l'empreinte digitale n'a pas été précédemment associée à un identifiant au sein du réseau, alors :
(a) on génère un nouvel identifiant au moyen d'un algorithme d'identifiant globalement unique (350) ;
(b) on associe le nouvel identifiant à l'empreinte digitale ;
(c) on stocke l'empreinte digitale et le nouvel identifiant associé dans une mémoire, le nouvel identifiant formant un identifiant unique persistant, PUID (*Persistent Unique Identifier*), relatif à cet appareil (360) ;
si l'empreinte digitale a été précédemment associée à un identifiant au sein du réseau, alors on utilise l'identifiant associé stocké dans la mémoire en tant que ledit identifiant unique persistant, PUID, relatif à cet appareil (340) ;
diffuser le nouveau PUID auprès des dispositifs de commande d'appareils au sein du réseau (370).

2. Procédé selon la revendication 1, dans lequel le fait de déterminer si l'empreinte digitale a été précédemment associée à un identifiant au sein du réseau comprend en outre l'étape consistant à effectuer une recherche parmi les empreintes digitales stockées et les identifiants associés présents dans la mémoire.

3. Procédé selon l'une quelconque des revendications précédentes, dans lequel l'étape consistant à générer une empreinte digitale comprend en outre les étapes consistant à générer un condensé de message à partir des informations obtenues.

4. Procédé selon la revendication 3, dans lequel l'étape consistant à stocker le nouvel identifiant comprend en outre les étapes consistant à stocker le nouvel identifiant associé au condensé de message dans une table de condensés de message dans la mémoire.

5. Procédé selon l'une quelconque des revendications précédentes, comprenant en outre l'étape consistant à maintenir l'homogénéité des PUID relatifs auxdits appareils entre les dispositifs de commande d'appareils au sein du réseau.

6. Système (200) permettant de maintenir des identifiants uniques persistants relatifs à des dispositifs interconnectés dans un réseau, comprenant :
un dispositif d'identification (210) adapté pour générer une empreinte digitale à partir d'informations, qui ne sont pas modifiées au redémarrage d'un appareil, obtenues en provenance dudit appareil ;
un dispositif de mise en correspondance (220) adapté pour déterminer si l'empreinte digitale a été précédemment associée à un identifiant au sein du réseau ;
un générateur (230) adapté pour générer un nouvel identifiant ;
de manière que :
si l'empreinte digitale n'a pas été précédemment associée à un identifiant au sein du réseau, alors le générateur est adapté pour générer un nouvel identifiant au moyen d'un algorithme d'identifiant globalement unique, et le dispositif de mise en correspondance est adapté pour associer le nouvel identifiant à l'empreinte digitale et à stocker l'empreinte digitale et le nouvel identifiant qui y est associé dans une mémoire d'un appareil, le nouvel identifiant formant un identifiant unique persistant, PUID, relatif à cet appareil ; et
si l'empreinte digitale a été précédemment associée à un identifiant au sein du réseau, alors le dispositif de mise en correspondance est adapté pour utiliser l'identifiant associé stocké dans la mémoire en tant que ledit identifiant unique persistant, PUID, relatif à cet appareil ;
dans lequel le système comprend en outre un dispositif de contrôle d'homogénéité adapté pour diffuser le nouveau PUID auprès des dispositifs de commande d'appareils au sein du réseau.

7. Système (200) selon la revendication 6, dans lequel le dispositif de mise en correspondance (220) est adapté pour déterminer si l'empreinte digitale a été précédemment associée à un identifiant au sein du réseau en effectuant une recherche parmi les empreintes digitales stockées et les identifiant associés présents dans la mémoire.

8. Système (200) selon l'une quelconque des revendications 6 et 7, dans lequel le générateur (230) est adapté pour générer l'empreinte digitale en générant un condensé de message à partir des informations obtenues.

9. Système (200) selon la revendication 8, dans lequel le dispositif de mise en correspondance (220) est adapté pour stocker le nouvel identifiant associé au condensé de message dans une table de condensés de message dans la mémoire.

10. Système (200) selon l'une quelconque des revendications 6 à 9, dans lequel le dispositif de contrôle d'homogénéité est adapté pour maintenir l'homogénéité des PUID relatifs auxdits appareils entre les dispositifs de commande d'appareils au sein du réseau.

11. Réseau (10) comprenant :
une pluralité d'appareils (100, 110, 120, 130, 140) interconnectés avec un dispositif de commande qui commande un ou plusieurs desdits appareils ; et
un système (200) connecté au réseau, le système permettant au dispositif de commande de maintenir des identifiants uniques persistants pour un ou plusieurs des appareils, le système étant conforme à l'une quelconque des revendications 6 à 10.
